# EUROPÄISCHE PATENTSCHRIFT

(11) **EP 0 619 205 B1**
(45) Veröffentlichungstag und Bekanntmachung des Hinweises auf die Patenterteilung: **20.11.1996**
(21) Anmeldenummer: 94101260.1
(22) Anmeldetag: 28.01.1994
(51) Int. Cl.: B60R 21/26

(54) **Gasgenerator**
Gas generator
Générateur de gaz

(30) Priorität: 06.04.1993 DE 4311276
(43) Veröffentlichungstag der Anmeldung: 12.10.1994
(73) Patentinhaber: MORTON INTERNATIONAL, INC., Chicago Illinois 60606-1596 (US)
(72) Erfinder: Nilsson, Karl, S-241 37 Eslöv (SE)
(74) Vertreter: Weber, Dieter, Dr.

(56) Entgegenhaltungen:
- EP-A- 0 455 435
- EP-A- 0 559 335
- DE-A- 3 126 079
- DE-A- 4 231 556
- DE-A- 4 242 793

## Beschreibung

Die vorliegende Erfindung betrifft einen Gasgenerator für einen Airbag, insbesondere in einem Kraftfahrzeug, bestehend aus einem Druckbehälter für die Aufnahme eines stark komprimierten Gases unter hohem Druck, mit mindestens einer durch eine Dichtung verschlossenen Öffnung in dem Druckbehälter und mit einem Auslösemechanismus.

Grundsätzlich sind im Stand der Technik zwei verschiedene Typen von Gasgeneratoren für Airbags bekannt. Der erste Typ ist rein pyrotechnischer Art, d.h. ein Gas liegt in chemisch gebundener Form vor, vorzugsweise in Form eines Granulats oder zu Tabletten gepreßten Pulvers und wird bei einer Zündung eines solchen Treibmittels schlagartig freigesetzt. Als Treibmittel werden dabei Substanzen auf der Basis von Natriumazid (NaN₃) und einem Oxidationsmittel (z.B. Eisenoxid) verwendet, welche im Falle einer Verbrennung den chemisch gebundenen Stickstoff freisetzen, der somit als Gas vorliegt und nunmehr ein wesentliches größeres Volumen einnimmt. Die verwendeten chemischen Gasspeicher bzw. Oxidatoren werden dabei gezielt in solchen Verhältnissen und solchen Zusammensetzungen miteinander vermengt und verarbeitet, daß die Freisetzung des Gases letztlich in Form einer kontrollierten Verbrennung abläuft d.h. zwar in sehr kurzer Zeit, da ein Airbag sich innerhalb von Bruchteilen von Sekunden mit Gas füllen muß, andererseits aber nicht in Form einer unkontrollierten Verbrennung, die den Airbag und auch die sonstige Peripherie ernstlich beschädigen könnte.

Diese pyrotechnischen Gasgeneratoren haben den Nachteil, daß bei ihrer Zündung erhebliche Mengen an festen Brennrückständen entstehen, die während des heftigen Verbrennungsvorganges unbedingt zurückgehalten werden müssen, damit sie nicht mit dem relativ dünnwandigen und empfindlichen Material des Airbags in Berührung treten, da sie diesen ansosten perforieren könnten, so daß eine Verbrennungsgefahr für die Fahrzeuginsassen entstehen würde. Dies erfordert eine integration von entsprechenden Filtern, die verhältnismäßig hohe Kosten für den Gasgenerator verursachen. Gasgeneratoren mit alternativen chemischen Substanzen und Gemengen auf organischer Basis haben den Nachteil, daß sie nicht immer sehr stabil sind und ihre Eigenschaften im Laufe der Zeit durch Wärmeeinfluß ändern. Da ein in ein Kraftfahrzeug eingebauter Airbag unter Umständen erst nach fünfzehn Jahren einmal benötigt wird, kann hierdurch die Funktionsfähigkeit erheblich beeinträchtigt werden. Außerdem erzeugen organische Treibstoffe hohe Anteile an toxischen Gasen, insbesondere Kohlenmonoxid (CO).

Aus den vorstehenden Gründen sind in der Vergangenheit bereits Gasgeneratoren entwickelt worden, die im wesentlichen aus einem Druckbehälter bestehen, der hochkomprimiertes Gas enthält sowie eine mit einer Dichtung versehene Öffnung aufweist. Außerdem ist für einen solchen Gasgenerator ein Auslösemechanismus vorgesehen, der z.B. eine Membran, die im allgemeinen die Austrittsöffnung eines solchen Druckbehälters verschließt, durchschießt oder sonstwie zerstört, so daß das unter hohem Druck stehende Gas austreten und den Airbag ausfüllen kann. Bei konventionellen Airbags für Fahrer bzw. Beifahrer in einem Kraftfahrzeug beträgt das Volumen eines derartigen Hochdruckbehälters üblicherweise zwischen 200 und 400 cm³ und das Gas wird in diesem Druckbehälter auf einen Druck zwischen typischerweise 200 und 300 bar komprimiert, so daß dieses Gas bei Normaldruck bzw. bei dem letztlich in dem gefüllten Airbag herrschenden leichten Überdruck ein Volumen zwischen ca. 50 und 150 Liter ausfüllt. Selbstverständlich sind auch Abweichungen von diesen typischen Zahlenwerten je nach Anwendungsfall ohne weiteres möglich.

Bei einem Gasgenerator, der ausschließlich in einem Druckbehälter komprimiertes Gas enthält, welches im Falle eines Unfalls freigesetzt wird, tritt jedoch der Nachteil auf, daß bei der in Bruchteilen von Sekunden ablaufenden und damit praktisch adiabatischen Entspannung des Gases dessen Temperatur drastisch absinkt, so daß es bei Normaldruck zunächst nur ein vergleichsweise kleines Volumen beansprucht, das nicht ausreichen würde, den Airbag genügend zu füllen, wenn man nicht den Druckbehälter entsprechend größer konzipiert Letzteres wäre jedoch mit Platzproblemen verbunden. Außerdem besteht bei solchen Gasgeneratoren der wesentliche Nachteil, daß die Gasentwicklung degressiv verläuft, während für die optimale und rechtzeitige Füllung eines Airbags eher eine progressive Gasentwicklung in der ersten Phasen erforderlich ist.

Aus diesem Grund haben sich neben den rein pyrotechnischen Gasgeneratoren in der Praxis vor allem sogenannte Hybridgeneratoren bewährt, die neben einem Speicher für hochkomprimiertes Gas auch noch eine pyrotechnische Ladung enthalten, die allerdings hauptsächlich zu Heizzwecken und weniger zur Gasentwicklung dient, so daß das sich adiabatisch ausdehnende Gas simultan mit seiner Ausdehnung geheizt wird und damit das Volumen des Airbags hinreichend ausfüllt. Gegenüber einem rein pyrotechnischen Gasgenerator hat ein solcher Hybridgenerator den Vorteil, daß die pyrotechnische Ladung ausschließlich zu Heizzwecken dienen muß und daß insofern eine größere Auswahl für geeignete pyrotechnische Heizmittel besteht. Die Menge der pyrotechnischen Ladung kann erheblich geringer gehalten werden als im Fall eines rein pyrotechnischen Gasgenerators, so daß nur wenig feste Verbrennungsrückstände erzeugt werden.

Durch wahlweise Auslegung bzw. Kombination der pyrotechnischen Heizladung sowohl bezüglich der Menge als auch bezüglich der Brenncharakteristik, läßt sich für den jeweiligen Fahrzeugbedarf ein optimaler Füllvorgang des Airbags mit dem Druckgas erzielen.

Es versteht sich, daß die Verwendung eines solchen Airbags weder auf Lenkradtöpfe, noch überhaupt auf Kraftfahrzeuge beschränkt ist sondern beispielsweise auch in Booten bzw. Schiffen oder Flugzeugen eingesetzt werden könnte und generell überall dort, wo plötzlich ein größeres Gasvolumen für kurze Zeit benötigt wird.

DE-A-4 231 556 stellt einen Hybridgenerator dar.

Bei den bisher bekannten Gasgeneratoren dieser Art wird, wie bereits erwähnt, das Gas unter einem Druck zwischen 200 und 300 bar, typischerweise bei ca. 250 bar, in einen Druckbehälter eingefüllt. Dieser Druckbehälter wird dann verschlossen und eine Auslaßöffnung für den Notfall ist durch eine Membran verschlossen, wobei ein Auslösemechanismus im Falle eines Unfalles oder sonstiger Auslösebedingungen für den Airbag die Dichtungsmembran zerstört und damit die Öffnung für den Austritt des Gases freigibt. Wie bereits erwähnt, kann dabei auch noch eine Heizladung entzündetwerden, die das austretende Gas gleichzeitig erwärmt. Es versteht sich, daß eine derartige Membran sehr sorgfältig konzipiert, hergestellt und in den Druckbehälter eingebaut sein muß. Denn einerseits muß diese Membran immerhin gegen einen Druck von ca. 250 bar den Druckbehälter über viele Jahre dicht verschließen, andererseits muß sie jedoch auch dem Auslösemechanismus sofort nachgeben, wenn ein Unfall oder andere Auslösebedingungen für den Airbag auftreten. Die Entwicklung und Herstellung derartiger Membranen sind insofern aufwendig und teuer. Auch der Auslösemechanismus muß entsprechend aufwendig konzipiertwerden, damit er mit einer festgelegten Mindestkraft die Membran zerstört und möglichst auch die Heizladung zündet.

Gegenüber diesem Stand der Technik liegt der vorliegenden Erfindung die Aufgabe zugrunde, einen Gasgenerator für Airbags mit den eingangs genannten Merkmalen zu schaffen, welcher einen vereinfachten konstruktiven Aufbau hat und damit preiswerter herzustellen ist und dennoch sicher funktioniert.

Diese Aufgabe wird dadurch gelöst, daß die für die Auslaßöffnung des Druckbehälters vorgesehene Dichtung so schwach ausgestaltet ist, daß sie dem Nenndruck der Gasfüllung in dem Druckbehälter nicht standhält bzw. nicht standhalten würde, wenn sie allein vorgesehen wäre, wobei ein zusätzliches, durch den Auslösemechanismus wegbewegbares Stützelement vorgesehen ist, welches die Dichtung abstützt und wobei die Dichtung an der Außenwand des Druckbehälters befestigt ist. Erst mit Hilfe dieses zusätzlichen Stützelementes kann die Dichtung dem von der Innenseite des Druckbehälters herwirkenden Druck standhalten. Sobald aberdiese Stütze fortfällt, wird die Dichtung zerstört oder losgerissen und gibt damit die Austrittsöffnung des Druckbehälters frei. Eine entsprechend schwache Dichtung mit einer entsprechend starken Stütze herzustellen, erfordert keinen großen konstruktiven und investiven (planerischen) Aufwand, vielmehr lassen sich entsprechende Dichtungen und Stützelemente mit geringem experimentellen Aufwand leicht in konkreter Form entwickeln. Insbesondere kann die Dichtung dabei einen sehr einfachen Aufbau haben und benötigt z.B. keine gezielt eingebauten Schwachstellen oder Sollbruchsteilen, wie dies bei den Membranen nach dem Stand der Technik üblich war. Dadurch hat man auch eine größere Freiheit für Form, Zahl und Anordnung der Austrittsöffnungen. Insbesondere können die Austrittsquerschnitte für das aus dem Druckbehälter austretende Gas beträchtlich vergrößert werden, was zu einem noch schnelleren Aufblähen des Airbags beiträgt.

Die Trennung der Abdichtungsfunktion von der Lastaufnahmefunktion der Dichtung bei dem im Innern des Druckbehälters herrschenden Druck gibt wiederum einen wesentlich größeren Spielraum für die Auswahl geeigneter Materialien, Ausgestaltungen und Formen für die Dichtung und das Stützelement im Gegensatz zum Stand der Technik, bei welchem die Dichtung beide Funktionen gleichzeitig erfüllen mußte. Insbesondere diese Trennung der beiden vorstehend genannten Funktionen erleichtert und vereinfacht den konstruktiven Aufbau des Gasgenerators und gewährleistet eine höhere Funktionssicherheit.

In der bevorzugten Ausführungsform der Erfindung hat der Druckbehälter neben der Auslaßöffnung für das unter Druck befindliche Gas zumindest eine Befüllöffnung, die getrennt von der Auslaßöffnung ist, was den Befüllungsvorgang insofern erleichtert, als die Austrittsöffnung zunächst mit der vorgesehenen Dichtung und dem zusätzlichen Stützelement verschlossen werden kann. Besonders bevorzugt ist eine Ausführungsform der Erfindung, bei welcher der Druckbehälter die Form eines Torus hat, wobei dieser Torus aus hydrostatischen Gründen möglichst auch einen näherungsweise kreisförmigen Querschnitt haben sollte.

Dabei ist außerdem erfindungsgemäß vorgesehen, daß die Dichtung an der die Ringöffnung des Torus definierenden inneren Ringfläche des Torus angeordnet ist. Es versteht sich, daß dies das Anbringen eines Stützelementes erleichtert, da selbstverständlich auch das wegbewegbare Stützelement auf der der Dichtung gegenüberliegenden Seite abgestützt werden muß, wobei eine solche gegenüberliegende Stützfläche auf der Innenseite eines Ringes bzw. Torus automatisch gegeben ist. Dabei ist es außerdem für das Anbringen der Dichtung und auch des Stützelementes zweckmäßig, wenn diese innere Ringfläche des Torus mindestens abschnittweise zylinderwandförmig oder zumindest eben ausgebildet ist. Es versteht sich, daß sich auf Zylinderflächen oder auf ebenen Flächenabschnitten Dichtungen wesentlich leichter anbringen lassen als auf einer echten Torusfläche eines Torus, dessen Korpus einen kreisförmigen Querschnitt hat.

Weiterhin ist eine Ausführungsform der Erfindung bevorzugt, bei welcher der Torus, aus welchem der Druckbehälter besteht, seinerseits aus mehreren Teilen zusammengesetzt ist, und zwar vorzugsweise aus mindestens zwei Teilen, wovon ein Teil ein die innere Ringwand des Torus bildendes Ringelement ist.

Dieses Ringelement hat in der bevorzugten Ausführungsform eine die innere Ringfläche des Torus definierende zylindrische Wand, die in axialer Richtung durch einen Flansch begrenzt ist, der so eine Anlageschulter sowohl für die Dichtung, als auch für das Stützelement bietet.

Die Dichtung ist in der bevorzugten Ausführungsform der Erfindung entweder ein Metallblatt, das z.B. an einer ebenen Fläche oder einem Zylinderwandabschnitt um eine Austrittsöffnung herum dicht befestigt ist, z.B. ein ringförmiger Metallblattstreifen oder, in der bevorzugten Ausführungsform der Erfindung, ein topfförmiger Membranring, der die ganze, mit Austrittsöffnungen versehene innere Ringfläche des Torus abdeckt.

Der Torus besteht im übrigen aus mindestens drei Teilen, nämlich neben dem inneren Ring aus einer, bezogen auf eine Meridianebene oberen bzw. unteren Ringhälfte, die an ihrem Außenumfang miteinander verschweißt sind, während ihre inneren Enden an den inneren Ring geschweißt sind.

Das Stützelement hat vorzugsweise eine zylindrische Außenkontur, wobei sein Durchmesser dem Innendurchmesser des Innenringes des Torus, gegebenenfalls noch abzüglich der Dicke der Dichtung, angepaßt ist.

In der bevorzugten Ausführungsform paßt das Stützelement entweder zusammen mit der Dichtung oder nachdem die Dichtung bereits an dem Innenring befestigt ist, mit Preßpassung in die innere Ringöffnung des Torus hinein, die durch eine zylindrische Wand definiert ist.

Daß das Stützelement eine zylindrische Außenkontur hat, bedeutet allerdings noch nicht, daß es auch eine exakt zylindrische Außenwand hat. Vielmehr weist diese Außenwand in der bevorzugten Ausführungsform der Erfindung noch eine Mehrzahl von in Axialrichtung verlaufenden Nuten auf, wobei jedoch diese Nuten so schmal gehalten werden oder beim Einsetzen des Stützelementes so angeordnet werden, daß entweder die Dichtung im Bereich der Nuten dem Innendruck des Gases in dem Druckbehälter standhält oder aber die Nuten nicht den Austrittsöffnungen gegenüberliegend angeordnet sind. Diese axialen Nuten haben den Zweck, daß bei dem bei Auslösung des Airbags axial wegbewegten Stützelement das zunächst radial nach innen aus dem Torus ausströmende und dann axial wegströmende Gas ohne nennenswerte Behinderung durch das Stützelement gegebenenfalls auch durch dessen in der Außenwand vorgesehene Nuten leichter in den Airbag entweichen kann.

Die Dichtung besteht vorzugsweise aus einem dünnen Metallblech, vorzugsweise aus Edelstahl von wenigen Zehntel Millimeter Wandstärke. Mehrere Austrittsöffnungen sind, im wesentlichen in einer Kreisebene angeordnet, an der Torusinnenfläche bzw. dem Innenring des Torus vorgesehen. Die Dichtung wird dann vorzugsweise in Form eines stirnseitig gelochten, topfförmigen Membranringes axial vor und hinter den Austrittsöffnungen ringförmig umlaufend an dem Innenring des Torus befestigt und abgedichtet, vorzugsweise durch einen Schweißvorgang, insbesondere durch Laserschweißen. Auf diese Weise wird in einfacher Weise eine Vielzahl von Öffnungen gleichzeitig mit zwei geometrisch sehr einfachen Schweißnähten abgedichtet Die einfache Schweißnahtgeometrie ist sowohl in herstellungstechnischer Hinsicht als auch in funktioneller Hinsicht von Vorteil, da sich derartige Schweißnähte relativ gleichmäßig, präzise und damit auch wirklich dicht herstellen lassen.

Bevorzugt ist weiterhin eine Ausführungsform der Erfindung, bei welcher das Stützelemet gleichzeitig als eine Art Schlagbolzen ausgebildet ist, wobei eine pyrotechnische Heizladung in etwa auf der Torusachse vor dem Schlagbolzen bzw. dem Stützelement angeordnet ist und zwar in dessen Bewegungsrichtung beim Wegbewegen aus seiner die Dichtung stützenden Position. Wird dann beispielsweise im Falle eines Unfalls eines Kraftfahrzeuges der Auslösemechanismus aktiv, so wird z.B. mit einer weiteren als Schlagzünder ausgelegten Zündkapsel bzw. einer Treibladung das in der engeren Ringfläche des torusförmigen Druckbehälters sitzende Stützelement in axialer Richtung fortgeschossen, trifft dabei auf die pyrotechnische Heizladung und zündet diese sofort, wobei gleichzeitig durch das Wegbewegen des Stützelementes die relativ dünne und schwache Dichtung auf ihrer den Drucköffnungen gegenüberliegenden Seite nicht mehr abgestützt ist und damit sofort nachgibt, aufreißt oder losreißt und das hochkomprimierte Gas aus dem Inneren des Druckbehälters entweichen läßt. Dabei kann auf dem weiteren Weg des Gases in den Airbag noch in zweckmäßiger Weise ein Sieb oder dergleichen angeordnet sein, das etwaige Feststoffpartikel aus der Verbrennung der Heizladung oder auch Bruchstücke des Stützelementes und/oder der Dichtung zurückhält, damit diese den dünnwandigen Airbag nicht beschädigen.

Das Stützelement besteht vorzugsweise aus einem Sintermetall, so daß es bei einer schlagartigen Belastung, wie z.B. beim Auslösen im Falle eines Unfalles, aufgrund seiner relativen Biegesprödigkeit gegebenenfalls auch leicht zerbricht, wenn es aus irgendwelchem Grund nicht sofort aus seinem Stützungssitz gegenüber der Dichtung herausrutschen sollte. Dabei ist zu beachten, daß das Stützelement relativ stabil ausgeführt werden muß, da nämlich über die Dichtung aufgrund des hohen Druckes in dem Druckbehälter erhebliche Kräfte in radialer Richtung nach innen auf das Stützelement ausgeübt werden, die jedoch ein Stützelement aus Sintermetall dank hoher Druckfestigkeit ohne weiteres tragen kann. Zweckmäßigerweise kann der torusförmige Druckbehälter zusammen mit den erfindungsgemäßen Bauteilen mehr oder weniger konzentrisch zu einer Lenkradachse im Inneren des Lenkradtopfes untergebracht werden.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1a: schematisch den Aufbau eines erfindungsgemäßen Gasgenerators mit Druckbehälter, Dichtung, Stützelement und Auslösemechanismus,
- Figur 1b: einen Aufbau ähnlich der Figur 1a, jedoch ergänzt zu einer Torusform,
- Figur 2: einen Schnitt durch einen Teil eines Gasgenerators einer bevorzugten Ausführungsform der Erfindung,
- Figur 3: einen vergrößerten Ausschnitt des Bereiches der Dichtung in Figur 2 und
- Figur 4: eine axiale Draufsicht auf das erfindungsgemäße Stützelement.

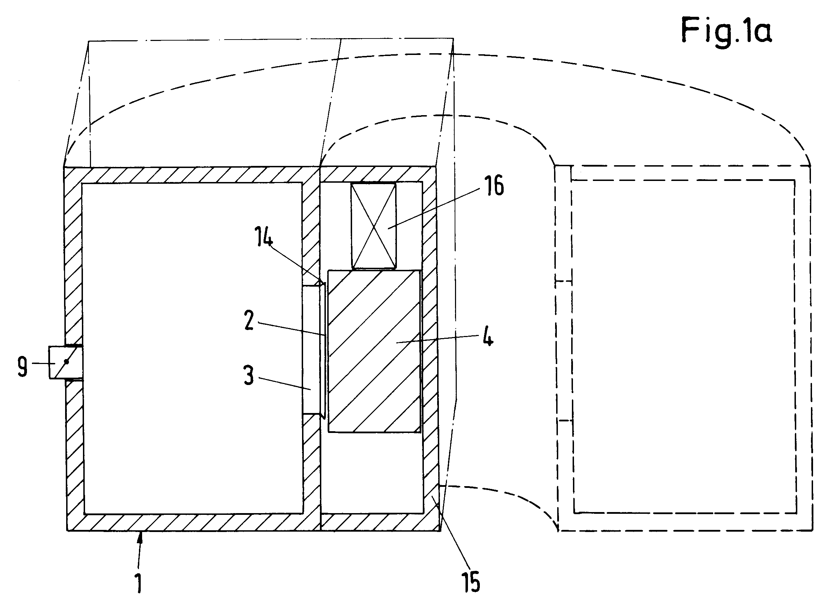

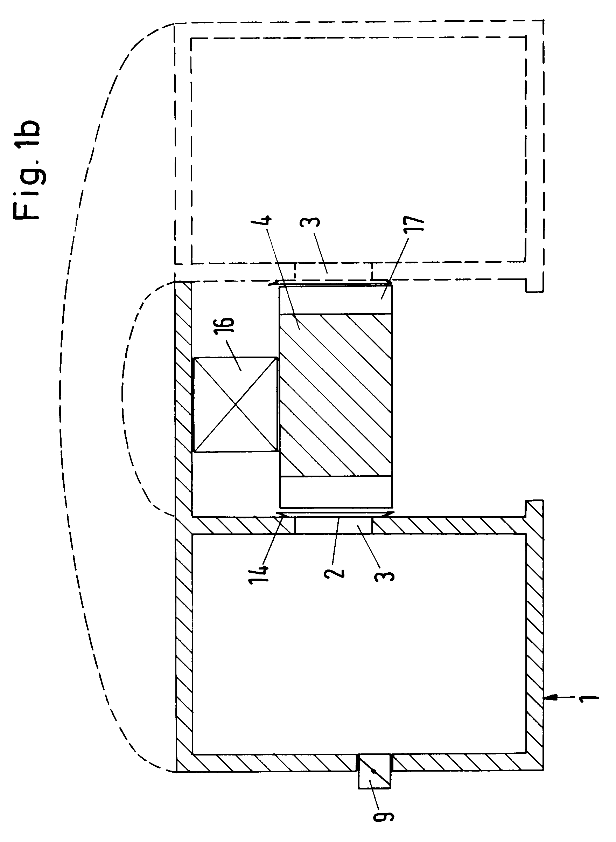

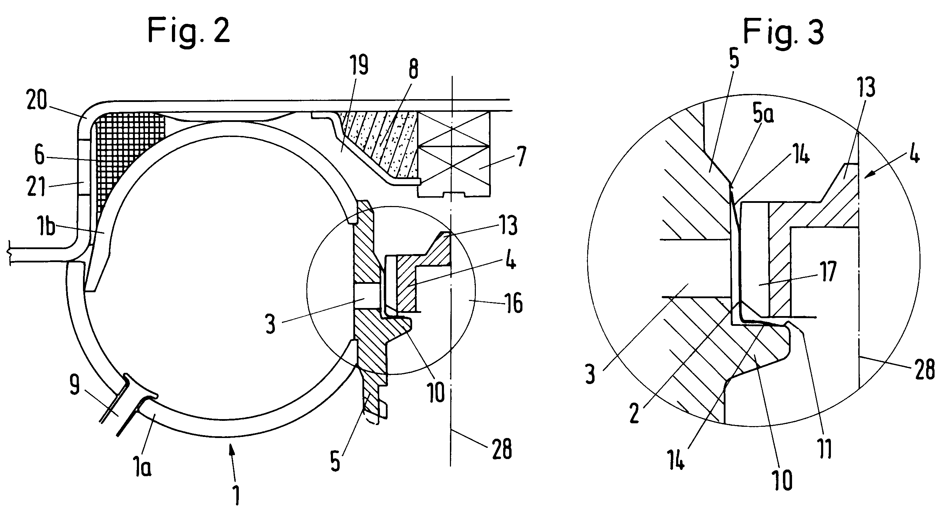

Figur 1 ist eine Prinzipskizze, die lediglich die wesentlichen Elemente des Erfindungsgegenstandes verdeutlichen soll. Wie auch die Figuren 2 bis 4 zeigen, weichen bei der bevorzugten Ausführungsform der Erfindung die Formen des Druckbehälters des Stützelementes etc. beträchtlich von den in Figur 1 dargestellten Bauteilen ab.

Man erkennt in Figur 1a einen im Schnitt im wesentlichen als rechteckiger Kasten dargestellten Druckbehälter 1, mit einer Befüllöffnung 9 in seiner linken Wand und einer Austrittsöffnung 3 in seiner rechten Wand. Die Austrittsöffnung 3 ist durch eine Dichtung 2, z.B. in Form eines dünnen Metallblättchens, verschlossen. Die Öffnung 3 kann im Querschnitt z.B. kreisförmig oder rechteckig sein und die Dichtung 2 ist dieser Form angepaßt und rund um die Öffnung 3 dicht am Rand der Öffnung bzw. der Außenwand des Druckbehälters 1 befestigt. Die Dichtung 2 wird auf ihrer der Öffnung 3 gegenüberliegenden Seite von einem Stützelement 4 abgestützt, das z.B. ein massiver Block aus Sintermetall sein kann. (Dieses Stützelement 4 wird seinerseits durch einen Bügel 15 gehalten, der fest mit dem Behälter 1 verbunden ist.) Falls die Dichtung 2 aus einem Metallblättchen besteht, kann sie z.B. rund um die Öffnung 3 mit der Wand des Behälters 1 verschweißt sein.

Eine einen Auslösemechanismus darstellende oder mit einem solchen verbundene Treibladung 16 ist an einer Im wesentlichen rechtwinklig zur Ebene der Dichtung 2 verlaufenden Fläche des Stützelementes 4 angeordnet. Durch Auslösen bzw. Zünden der Treibladung 16 wird das Stützelement 4 nach unten geschossen. Damit entfällt die Abstützung der Dichtung 2, die zuvor auf dem größten Teil ihrer Fläche vorhanden war. Während zuvor bei Anwesenheit des Stützelementes 4 der größte Teil der Druckkraft des im Druckbehälter 1 befindlichen, komprimierten Gases über die Dichtung 2 unmittelbar auf das Stützelement 4 übertragen wurde und lediglich die rund um die Öffnung 3 herumlaufenden Schweißnähte eine wegen ihrer insgesamt recht geringen Fläche vergleichsweise geringe Druckkratt aufzunehmen hatten, müssen die Dichtung 2 bzw. deren Schweißnähte nunmehr die gesamte Druckkraft aufnehmen, die sich aus dem Produkt des in dem Druckbehälter 1 herrschenden Druckes und der Gesamtfläche der Dichtung 2 ergibt. Wenn die Dichtung 2 z.B. ein Blättchen aus Edelstahl in einer Stärke von z.B. 0,2 mm ist und wenn weiterhin die Gesamtfläche der Austrittsöffnung ca. 1 cm² beträgt, so ist eine solche Dichtung 2 bzw. sind deren Schweißnähte zur Befestigung an der Wand des Behälters 1 zu schwach, um die Gesamtkraft von ca. 250 kp (2500 N) aufzufangen, die das komprimierte Gas in etwa aufbringt. Bei einer rohr- bzw. topfförmigen Dichtung 2 mit einer umlaufenden Schweißnaht an der jeweiligen Seite der Öffnung bzw. Öffnungen 3 vergrößert sich das Verhälnis der Gesamtkraft des Gasdruckes zu den Schweißnahtlängen nochmals. Die Dichtung 2 oder deren Schweißnähte werden also reißen und das Gas freigeben. Es versteht sich, daß je nach Größe der Austrittsöffnungen und je nach Festigkeit des Materials der Dichtung und der Schweißnähte die Wandstärke der Dichtung in geeigneter Weise angepaßt werden kann, so daß die Dichtung 2 oder ihre Schweißnähte auf jeden Fall reißen, wenn der volle Druck in der Größenordnung zwischen 200 und 300 bar auf die Gesamtfläche der Dichtung wirkt, während andererseits im Falle des Abstützens des größten Teils der Dichtungsfläche die verbleibenden, auf die Dichtung wirkenden Restkräfte von dieser bzw. deren Schweißnähten ohne weiteres aufgefangen werden.

Während grundsätzlich sowohl der Querschnitt des Druckbehälters 1 als auch dessen Erstreckung senkrecht zur Zeichenebene beliebig sein kann, so ist dennoch eine sinnvolle Ergänzung dieser Querschnittsform zu einem Torus in Figur 1a gestrichelt angedeutet, und zwar mit rechteckigem Torusquerschnitt. (Wie man sich anhand der Figuren 1a,b leicht vorstellen kann, kann dann der Bügel 15 ohne weiteres entfallen und das Stützelement wird lediglich in radialer Richtung so erweitert, daß es sich auf der gegenüberliegenden Innenfläche des Toruskörpers abstützt.) Die quaderförmige Variante mit Haltebügel 15 ist in Figur 1a mit einer strichpunktierten Linie angedeutet. Die Torus-Variante ist in Figur 1b nochmals dargestellt. Während also in Figur 1a der Druckbehälter ohne weiteres eine mehr oder weniger quaderförmige Box sein kann, an deren einer Seite ein Bügel angeordnet ist, um den Stützkörper für die Dichtung zu halten, kann dieser Bügel bei der Ergänzung zu einem Torus gemäß Figur 1b entfallen, wobei diese Variante bereits in Figur 1a gestrichelt angedeutet ist. Selbstverständlich kann dann auch gegenüberliegend zur Austrittsöffnung 3 eine weitere Austrittsöffnung 3 vorgesehen werden oder es können auch beliebig viele Austrittsöffnungen um den inneren Umfang des Torus herum verteilt werden, die in der bevorzugten Ausführungsform der Erfindung durch ein ringförmiges Dichtungsband 2 abgedeckt werden. Eine derartige Merkmale aufweisende Ausführungsform ist in den Figuren 2 und 3 dargestellt, die jeweils einen Querschnitt durch einen Teil des toroidalen Druckbehälters darstellen.

Der Unterschied der Ausführungsform der Figur 2 im Vergleich zu der gestrichelt dargestellten Ergänzung der Ausführungsform gemäß Figur 1b besteht zum einen im Querschnitt des torusförmigen Druckbehälters, der in Figur 2 näherungsweise kreisförmig ist, da der Druckbehälter mit einer solchen Form eine höhere Druckaufnahmefähigkeit und ein günstiges Volumen-zu-Fläche-Verhältnis hat. Außerdem ist der Druckbehälter 1 bei der Ausführungsform gemäß Figur 2 aus im wesentlichen drei Teilen hergestellt, nämlich einem unteren Halbring und einem oberen Halbring, die entlang einer außen umlaufenden Schweißnaht miteinander verbunden sind, sowie einem die innere Ringöffnung des Torus festlegenden Innenring 5, der mit den inneren Rändern der beiden Halbringe verschweißt ist. Abgesehen von einer zweckmäßigen Anpassung der Außenflächen und Kanten des Ringes 5, insbesondere im Übergangsbereich zu den Halbringen des Druckbehälters, weist der Ring 5 vor allem eine innere Zylinderwandfläche 5a sowie einen Flansch 10 auf. Der Flansch 10 bildet eine Schulterfläche 11, welche die Zylinderwandfläche auf einer Seite in axialer Richtung begrenzt. In der Zylinderwandfläche sind über den Ringumfang verteilt mehrere Öffnungen 3 z.B. in Form von Bohrungen vorgesehen. Zwar wäre auch eine einzige Öffnung 3 ausreichend, vorzugsweise sind jedoch z.B. vier oder mehr Öffnungen um den Ringumfang verteilt vorgesehen. Die Dichtung 2 ist ein ringförmig umlaufendes Metallband, welches jedoch leicht profiliert ist und, wie man in Figur 3 erkennt, einen näherungsweise L-förmigen Querschnitt aufweist. Für eine präzise und dennoch kostengünstige Herstellung der Dichtfunktion, sowohl was die Dichtung 2 als Einzelteil als auch die Anpassung an den Ring 5 bzw. das Stützelement 4 und deren Verschweißung betrifft, wird eine Ausführung der Dichtung 2 als tiefgezogener Blechtopf mit einem kreisförmig herausgestanzten Bodenabschnitt bevorzugt. Der eine Schenkel der Dichtung liegt auf der Schulterfläche 11 des Flansches 10 auf, während der andere Schenkel sich parallel zur Zylinderwand 5a des Ringes 5 erstreckt und dabei auch alle Öffnungen 3 abdeckt. Oberhalb des Kranzes von Öffnungen 3 ist die Dichtung 2 mit der zylindrischen Innenwand 5a des Ringes 5, und unterhalb des Kranzes von Öffnungen ist der zweite Schenkel der Dichtung 2 mit der Schulterfläche 11 des Flansches 10 verschweißt, vorzugsweise durch Laserschweißen, weil sich mit Hilfe eines automatisch gesteuerten Laserstrahls auch sehr dünne Bleche mit absolut dichten Schweißnähten an entsprechenden Gegenflächen verschweißen lassen.

Auf der anderen Seite ist auch der auf dem Flansch 10 aufliegende Schenkel der im Querschnitt L-förmigen, ansonsten rohrförmigen Dichtung 3 mit dem Flansch 10 verschweißt. Ein Stützelement 4 mit einer zylinderförmigen Außenkontur ist in den Innenring des Torus eingesetzt, wobei der Außendurchmesser des Stützelementes 4 geringfügig kleiner ist als der Innendurchmesser der zylindrischen Wand 5a des Ringes 5. Das Stützelement 4 wird nach dem Verschweißen der Dichtung 2 in diese bis zum axialen Anschlag mit dem Flansch 10 hineingedrückt und bleibt dort durch Preßpassung zu der Dichtung 2 ausreichend fest gehalten, um ein unbeabsichtigtes Loslösen etwa durch Schlag oder Vibration zu gewährleisten.

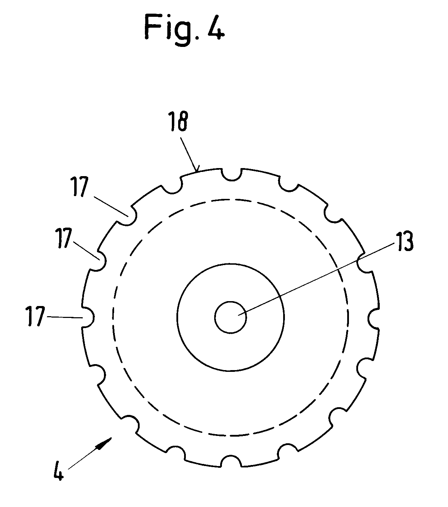

Wie man in Figur 4 sieht, weist die mehr oder weniger zylindrische Außenwand des Stützelementes 4 außerdem über den Umfang verteilte, in Axialrichtung verlaufende Nuten 17 auf, von denen in den Figuren 2 und 3 gerade eine im Schnitt dargestellt ist. Während in den übrigen Bereichen die Dichtung 2 an die zylindrische Außenwand 18 des Stützelementes 4 fest angepreßt wird, ist in Figur 3 angedeutet, daß die Dichtung sich im zylindrischen Randbereich leicht in Richtung auf den Ring 5 erweitert, damit die Schweißnaht etwa durch Auftragung die Axialbewegung des Stützelementes 4 nicht behindert. Die Nuten 17 werden so schmal dimensioniert, daß die Dichtung die dabei auftretenden Kräfte ohne weiteres aufnimmt und nicht reißt oder nachgibt.

In Figur 2 ist das Stützelement 4 lediglich zur Hälfte, d.h. bis zur Gasgeneratorachse 28 dargestellt. Es versteht sich, daß bei einer vollständigen Schnittdarstellung die andere Seite rechts von der Achse 28 spiegelsymmetrisch zu ergänzen wäre. Wie man erkennt, ist demnach das Stützelement 4 ein hohlzylindrisches Teil, dessen eine Stirnseite verschlossen und mit einer als Schlagbolzen wirkenden Spitze 13 versehen ist. Eine Treibladung 16 befindet sich in dem vom Stützelement 4 gebildeten Hohlraum und wird im Falle eines Unfalles durch einen von einem sich im Fahrzeug befindlichen beschleunigungsabhängigen Sensorik z.B. elektrischen Strom. Hierdurch wird das Stützelement 4 in axialer Richtung auf einen Schlagzünder 7 mit anschließender pyrotechnischer Heizladung 8 geschossen, die hierdurch ebenfalls gezündet wird und das aus dem Druckbehälter 1 durch die Öffnungen 3 austretende Gas erwärmt, weiches sich aufgrund der plötzlichen Druckminderung und Entspannung abkühlt. Das Gas kann aus dem Druckbehälter 1 durch die Öffnungen 3 entweichen, nachdem das Stützelement 4 auf den Schlagzünder 7 mit pyrotechnischer Heizladung 8 geschossen wurde, da nunmehr der durch die Öffnungen 3 auf die gesamte Fläche der Dichtung 2 wirkende Innendruck des Behälters die Dichtung 2 oder deren Schweißnähte an dem Ring 5 zerreißt. Da sich das Stützelement aus Platzgründen in axialer Richtung nicht sehr weit von dem Ring 5 entfernen kann, haben die Axialnuten 17 den Vorteil, daß die nun einsetzende Gasströmung aus dem Druckbehälter 1, durch die Öffnungen 3, in Figur 3 nach oben an dem Stützelement 4 vorbei und durch den Kanal 19 über das Sieb 6 und die Ausströmungsöffnungen 21 des Gasgenerators in den anschließenden zusammengefalteten Airbag. Mit 6 ist dabei ein Sieb gekennzeichnet, welches etwaige Verbrennungsrückstände der pyrotechnischen Heizladung 8 zurückhalten soll.

Die bevorzugte Ausführungsform der vorliegenden Erfindung ist somit ein Gasgenerator vom Hybridtyp, der einen herstellungstechnisch einfachen und kostengünstigen Aufbau hat. Dabei versteht es sich jedoch, daß die Funktion der Erfindung von der Existenz einer pyrotechnischen Heizladung völlig unabhängig ist und daß selbstverständlich auch das Stützelement 4 nicht mit einer pyrotechnischen Treibladung sondern auch durch eine vorgespannte, starke Feder oder dergleichen von der Dichtung 2 wegbewegt werden kann. Weiterhin versteht es sich, daß auch die Torusform des Druckbehälters für die Funktion der Erfindung keineswegs zwingend erforderlich ist, wie die Figur 1 (ohne die gestrichelt gezeichnete Ergänzung) und die entsprechenden Erläuterungen hierzu gezeigt haben.

Weiterhin ist es auch nicht erforderlich, daß die Dichtung 2 an den Ring 5 oder entsprechende Flächen eines Druckbehälters angeschweißt wird und es ist auch nicht erforderlich, daß die Dichtung 2 aus einem Metall besteht. So könnte beispielsweise die äußere Kante der Öffnung 3 mit einer Erweiterung oder schulterförmigen Aussparung versehen sein, in welche eine verformbare Dichtung mit Übermaß eingesetzt wird. Das Wechselspiel des Innendruckes des Gases mit dem von außen dagegenwirkenden Druck des Stützelementes preßt dann eine solche zusätzliche, elastische Dichtung in eine solche Aussparung hinein und gegen die blattförmige Dichtung, so daß auch hierdurch eine sichere Abdichtung erzielt werden kann, wenn auch möglicherweise die Herstellung hierdurch etwas aufwendiger wird.

## Patentansprüche

1. Gasgenerator für einen Airbag, Insbesondere in einem Kraftfahrzeug, bestehend aus einem Druckbehälter (1) für die Aufnahme eines unter hohem Druck stark komprimierten Gases, mit mindestens einer durch eine Dichtung (2) verschlossenen Öffnung (3) in dem Druckbehälter (1), und mit einem Auslösemechanismus, dadurch gekennzeichnet, daß die Dichtung (2) so schwach ausgestaltet ist, daß sie dem Nenndruck der Gasfüllung in dem Druckbehälter (1) allein nicht standhält; daß sie an der Außenwand des Druckbehälters befestigt ist und daß ein zusätzliches, durch den Auslösemechanismus wegbewegbares Stütztelement (4) vorgesehen ist, welches die Dichtung (2) abstützt.

2. Gasgenerator nach Anspruch 1, dadurch gekennzeichnet, daß der Druckbehälter (1) mindestens eine Befüllöffnung (9) hat.

3. Gasgenerator nach Anspruch 1 oder 2, dadurch gekennzeichnet, daß der Druckbehälter (1) die Form eines Torus hat, wobei der Toruskörper einen näherungsweise kreisförmigen Querschnitt hat.

4. Gasgenerator nach einem der Ansprüche 1 bis 3, dadurch gekennzeichnet, daß die Dichtung (2) an der die Ringöffnung des Torus definierenden inneren Ringfläche des Torus angeordnet ist.

5. Gasgenerator nach einem der Ansprüche 1 bis 4, dadurch gekennzeichnet, daß die innere Ringfläche des Torus mindestens abschnittweise zylinderwandförmig oder eben ausgebildet ist.

6. Gasgenerator nach Anspruch 5, dadurch gekennzeichnet, daß an der die Ringöffnung des Torus definierenden Innenfläche ein radial nach innen vorspringender Flansch (10) vorgesehen ist, der unter Bildung einer Schulter eine axiale Stützfläche für das Stützelement bietet.

7. Gasgenerator nach einem der Ansprüche 3 bis 6, dadurch gekennzeichnet, daß der Torus aus mindestens zwei Teilen besteht, wovon eines ein die Ringöffnung des Torus definierender Innenring (5) ist, welcher radial gerichtete Auslaßöffnungen (3), mindestens im Bereich der Auslaßöffnungen (3) eine zylindrische Innenwand sowie einen die zylindrische Innenwand axial begrenzenden, radial nach innen vorspringenden Flansch (10) aufweist, dessen eine Fläche eine Auflageschulter (11) für das Stützelement (4) und/oder die Dichtung (2) bildet.

8. Gasgenerator nach einem der Ansprüche 1 bis 7, dadurch gekennzeichnet, daß mehrere Austrittsöffnungen (3) entlang der Innenseite des torusförmigen Druckbehälters (1) vorgesehen sind.

9. Gasgenerator nach einem der Ansprüche 1 bis 8, dadurch gekennzeichnet, daß die Dichtung aus einem relativ dünnen Metallblatt besteht.

10. Gasgenerator nach einem der Ansprüche 1 bis 9, dadurch gekennzeichnet, daß das Stützelement (4) eine näherungsweise zylindrische Außenkontur hat und radial Innerhalb der ringförmigen Torusöffnung und diese im wesentlichen ausfüllend vorgesehen ist.

11. Gasgenerator nach einem der Ansprüche 1 bis 10, dadurch gekennzeichnet, daß die Dichtung ein Ring aus einem dünnen Metallblech, vorzugsweise aus Edelstahl ist

12. Gasgenerator nach einem der Ansprüche 1 bis 11, dadurch gekennzeichnet, daß die Dichtung aus einem topfförmigen, tiefgezogenen Metallblech, vorzugsweise mit stirnseitigen Öffnungen, besteht.

13. Gasgenerator nach Anspruch 11 oder 12, dadurch gekennzeichnet, daß die Dichtung unter Abdeckung der mindestens einen Öffnung (3) an die innere Ringfläche des Torus (1) angeschweißt ist.

14. Gasgenerator nach einem der Ansprüche 1 bis 13, dadurch gekennzeichnet, daß das Stützelement als Schlagbolzen ausgebildet ist, wobei eine pyrotechnische Heizladung näherungsweise auf der Torusachse vor dem Schlagbolzen angeordnet ist.

15. Gasgenerator nach Anspruch 14, dadurch gekennzeichnet, daß das Stützelement ein hohlzylindrischer, an einer Stirnseite geschlossener Körper mit einer Schlagspitze auf der Außenseite der Stirnfläche ist.

16. Gasgenerator nach Anspruch 14 oder 15, dadurch gekennzeichnet, daß der Auslösemechanismus für die Verschiebung des Stützelementes (4) eine pyrotechnische Ladung mit Zündmechanismus aufweist.

17. Gasgenerator nach einem der Ansprüche 1 bis 16, dadurch gekennzeichnet, daß das Stützelement (4) aus einem Sintermetall besteht.

18. Gasgenerator nach einem der Ansprüche 1 bis 17, dadurch gekennzeichnet, daß er in dem Lenkradtopf eines Kraftfährzeuges angeordnet ist, wobei die Torusachse in etwa parallel zur Lenkradachse verläuft.

## Claims

1. A gas generator for an airbag, in particular in a motor vehicle, consisting of a pressure vessel (1) to receive an intensively compressed gas under high pressure, with at least one opening (3), closed by a seal (2), in the pressure vessel (1), and with a release mechanism, characterised in that the seal (2) is constructed so be so weak that it does not withstand the nominal pressure of the gas filling in the pressure vessel (1) alone, that it is secured on the outer wall of the pressure vessel and that an additional support element (4) is provided, which is able to be moved away by the release mechanism and which supports the seal (2).

2. A gas generator according to Claim 1, characterised in that the pressure vessel (1) has at least one filling opening (9).

3. A gas generator according to Claim 1 or 2, characterised in that the pressure vessel (1) has the form of a torus, in which the torus body has an approximately circular cross-section.

4. A gas generator according to one of Claims 1 to 3, characterised in that the seal (2) is arranged on the inner ring surface of the torus defining the ring opening of the torus.

5. A gas generator according to one of Claims 1 to 4, characterised in that the inner ring surface of the torus is constructed at least in sections in cylinder wall shape or flat.

6. A gas generator according to Claim 5, characterised in that on the inner surface, defining the ring opening of the torus, a radially inwardly projecting flange (10) is provided, which with the formation of a shoulder offers an axial support surface for the support element.

7. A gas generator according to one of Claims 3 to 6, characterised in that the torus consists of at least two parts, one of which is an inner ring (5) defining the ring opening of the torus, which inner ring (5) has radially directed outlet openings (3), has at least in the region of the outlet openings (3) a cylindrical inner wall and also has a flange (10) axially delimiting the cylindrical inner wall and projecting radially inwards, the one surface of which flange (10) forms a bearing shoulder (11) for the support element (4) and/or the seal (2).

8. A gas generator according to one of Claims 1 to 7, charcterised in that several outlet openings (3) are provided along the inner side of the torus-shaped pressure vessel (1).

9. A gas generator according to one of Claims 1 to 8, characterised in that the seal consists of a relatively thin metal sheet.

10. A gas generator according to one of Claims 1 to 9, characterised in that the support element (4) has an approximately cylindrical outer contour and is provided radially within the ring-shaped torus opening and substantially filling the latter.

11. A gas generator according to one of Claims 1 to 10, characterised in that the seal is a ring of a thin metal sheet, preferably of high-grade steel.

12. A gas generator according to one of Claims 1 to 11, characterised in that the seal consists of a cup-shaped, deep-drawn metal sheet, preferably with openings on the front side.

13. A gas generator according to Claim 11 or 12, characterised in that the seal is welded onto the inner ring surface of the torus (1) with covering of the at least one opening (3).

14. A gas generator according to one of Claims 1 to 13, characterised in that the support element is constructed as a firing pin, in which a pyrotechnic heating charge is arranged approximately on the torus axis in front of the firing pin.

15. A gas generator according to Claim 14, characterised in that the support element is a hollow cylindrical body, closed on a front face, with a firing pin point on the outer side of the front face.

16. A gas generator according to Claim 14 or 15, characterised in that the release mechanism for the movement of the support element (4) has a pyrotechnic charge with ignition mechanism.

17. A gas generator according to one of Claims 1 to 16, characterised in that the support element (4) consists of a sinter metal.

18. A gas generator according to one of Claims 1 to 17, characterised in that it is arranged in the steering wheel cap of a motor vehicle, in which the torus axis runs approximately parallel to the steering wheel axis.

## Revendications

1. Générateur de gaz pour un airbag, en particulier pour un véhicule automobile, comprenant un réservoir sous pression (1) pour recevoir un gaz fortement comprimé sous haute pression, qui présente au moins une ouverture (3) dans le réservoir sous pression (1) refermée par un joint (2), et comprenant un mécanisme de déclenchement, caractérisé en ce que le joint (2) est réalisé avec une telle faiblesse qu'il ne résiste pas seul à la pression de consigne de la charge de gaz dans le réservoir sous pression (1), en ce qu'il est fixé sur la paroi extérieure du réservoir sous pression, et en ce qu'il est prévu un élément de support additionnel (4), susceptible d'être déplacé en éloignement par le mécanisme de déclenchement, qui supporte le joint (2).

2. Générateur de gaz selon la revendication 1, caractérisé en ce que le réservoir sous pression (1) comporte au moins une ouverture de remplissage (9).

3. Générateur de gaz selon l'une ou l'autre des revendications 1 et 2, caractérisé en ce que le réservoir sous pression (1) a la forme d'un tore, et le corps du tore présente une section transversale approximativement de forme circulaire.

4. Générateur de gaz selon l'une quelconque des revendications 1 à 3, caractérisé en ce que le joint (2) est agencé sur la surface annulaire intérieure du tore qui définit l'ouverture annulaire du tore.

5. Générateur de gaz selon l'une quelconque des revendications 1 à 4, caractérisé en ce que la surface annulaire intérieure du tore est réalisée au moins par tronçons sous forme de paroi cylindrique ou plane.

6. Générateur de gaz selon la revendication 5, caractérisé en ce que sur la surface intérieure qui définit l'ouverture annulaire du tore il est prévu une bride (10) qui fait saillie radialement vers l'intérieur et qui assure, en formant un épaulement, une surface d'appui axiale pour l'élément de support.

7. Générateur de gaz selon l'une quelconque des revendications 3 à 6, caractérisé en ce que le tore est constitué d'au moins deux parties, dont l'une est une bagne intérieure (5) qui définit l'ouverture annulaire du tore et qui comporte des ouvertures de sortie (3) dirigées radialement, une paroi intérieure cylindrique, au moins dans la région des ouvertures de sortie (3), ainsi qu'une bride (10) qui fait saillie radialement vers l'intérieur et délimite la paroi intérieure cylindrique, une surface de ladite bride formant un épaulement d'appui (11) pour l'élément de support (4) et/ou pour le joint (2).

8. Générateur de gaz selon l'une quelconque des revendications 1 à 7, caractérisé en ce que plusieurs ouvertures de sortie (3) sont prévues le long du côté intérieur du réservoir sous pression (1) de forme torique.

9. Générateur de gaz selon l'une quelconque des revendications 1 à 8, caractérisé en ce que le joint est formé par une feuille de métal relativement mince.

10. Générateur de gaz selon l'une quelconque des revendications 1 à 9, caractérisé en ce que l'élément de support (4) a un contour extérieur approximativement cylindrique et en ce qu'il est prévu radialement à l'intérieur de l'ouverture de forme annulaire du tore en remplissant sensiblement cette ouverture.

11. Générateur de gaz selon l'une quelconque des revendications 1 à 10, caractérisé en ce que le joint est une bague en tôle de métal mince, de préférence en acier inoxydable.

12. Générateur de gaz selon l'une quelconque des revendications 1 à 11, caractérisé en ce que le joint est constitué par une tôle de métal emboutie en forme de pot, de préférence avec des ouvertures du côté frontal.

13. Générateur de gaz selon l'une ou l'autre des revendications 11 et 12, caractérisé en ce que le joint est soudé sur la surface annulaire intérieure du tore (1) en recouvrant ladite au moins une ouverture (3).

14. Générateur de gaz selon l'une quelconque des revendications 1 à 13, caractérisé en ce que l'élément de support est réalisé sous forme d'un goujon percuteur, et en ce qu'une charge de chauffage pyrotechnique est agencée devant le goujon percuteur approximativement sur l'axe du tore.

15. Générateur de gaz selon la revendication 14, caractérisé en ce que l'élément de support est un corps cylindrique creux fermé sur un côté frontal, avec une pointe de percussion sur la face extérieure du côté frontal.

16. Générateur de gaz selon l'une ou l'autre des revendications 14 et 15, caractérisé en ce que le mécanisme de déclenchement pour le déplacement de l'élément de support (4) comporte une charge pvrotechnique avec un mécanisme d'allumage.

17. Générateur de gaz selon l'une quelconque des revendications 1 à 16, caractérisé en ce que l'élément de support (4) est réalisé en métal fritté.

18. Générateur de gaz selon l'une quelconque des revendications 1 à 17, caractérisé en ce qu'il est agencé dans la cuvette de volant d'un véhicule automobile, et en ce que l'axe du tore s'étend approximativement parallèlement à l'axe du volant.
